(19) Europäisches Patentamt

European Patent Office

Office européen des brevets

(11) EP 0 840 438 B1

## (12) EUROPEAN PATENT SPECIFICATION

(45) Date of publication and mention
of the grant of the patent:
**17.11.2004 Bulletin 2004/47**

(51) Int Cl.⁷: **H02P 6/14**, H02P 7/05

(21) Application number: **97307568.2**

(22) Date of filing: **26.09.1997**

(54) **Switched reluctance motor driving circuit**

Steuerkreis für einen geschalteten Reluktanzmotor

Cicuit de pilotage pour moteur à réluctance variable commuté

(84) Designated Contracting States:
**DE FR GB**

(30) Priority: **04.11.1996 KR 9651767**

(43) Date of publication of application:
**06.05.1998 Bulletin 1998/19**

(73) Proprietor: **Samsung Electronics Co., Ltd.
Suwon-si, Gyeonggi-do 442-742 (KR)**

(72) Inventor: **Kim, Ki-Bong
Suwon-city, Kyungki-do (KR)**

(74) Representative: **Read, Matthew Charles et al
Venner Shipley LLP
20 Little Britain
London EC1A 7DH (GB)**

(56) References cited:
**EP-A- 0 114 274       WO-A-96/12339
GB-A- 2 157 089       US-A- 4 321 662**

## Description

The present invention relates to a driving circuit for a switched reluctance motor, comprising a switching circuit arranged to selectively pass currents through the stator coils of a switched reluctance motor in dependence on the position of the rotor of the motor being driven.

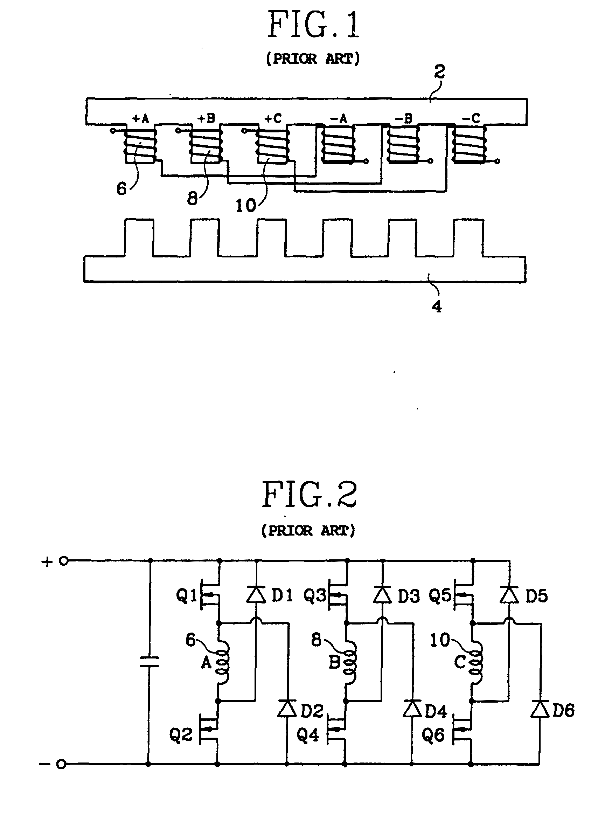

Referring to Figure 1, a switched reluctance motor (switched reluctance motor) has a stator 2 and a rotor 4. The stator 2 has A-, B- and C-phase coils 6, 8, 10 wound on + A and -A poles, +B and -B poles, and +C and -C poles, respectively.

Referring to Figure 2, a driving circuit for such a switched reluctance motor comprises a smoothing capacitor C for providing a dc voltage, first to sixth switching elements Q1, ...,Q6 for applying electric current to the phase coils 6, 8, 10, and six diodes D1 to D6 for protecting the switching elements Q1, ..., Q6 from the back electromotive force created when the switching elements Q1, ..., Q6 are turned off.

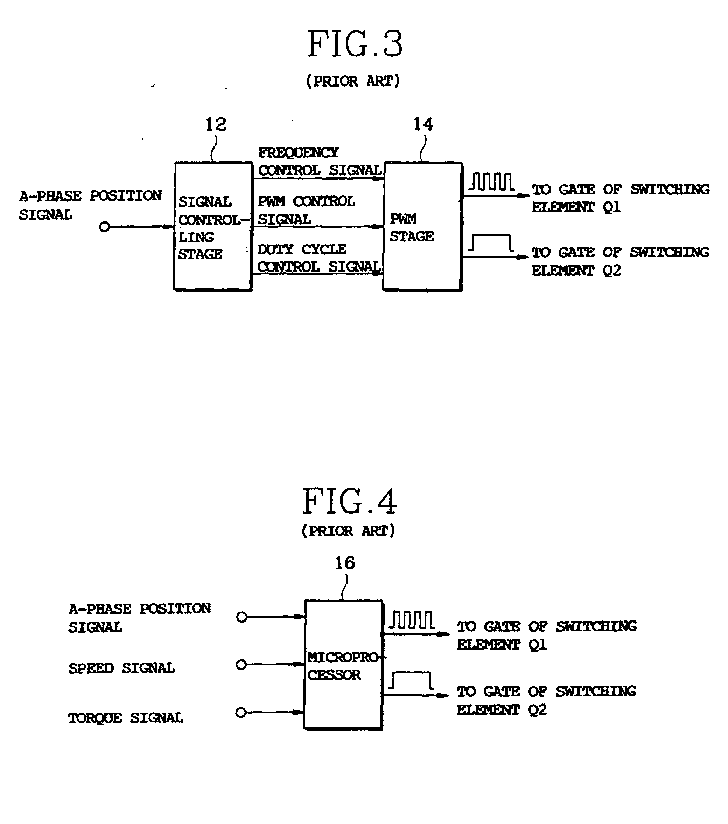

Referring to Figure 3, a conventional switched reluctance motor speed control apparatus for controlling the driving circuit consists of a signal controlling stage 12 and a pulse width modulation stage 14.

For the switched reluctance motor speed control apparatus as shown in Figure 3, the signal controlling stage 12 generates a frequency control signal, a pulse width control signal, and a duty-cycle control signal. The frequency control signal corresponds to a rotor positional signal supplied by an A-phase position sensor (not shown), or an A-phase position signal. The pulse width modulation stage 14 generates a chopping signal, whose pulse width is modulated in response to three control signals output from the signal controlling stage 12, and applies it to the gate terminal of the first switching element Q1. The pulse width modulating stage 14 also applies the A-phase position signal to gate of the second switching element Q2.

An alternative example of a conventional speed control apparatus intended to generate a chopping signal for purpose of controlling of switched reluctance motor speed is shown in Figure 4. Further prior art uses a microprocessor 16 which receives A-phase position signals from an A-phase position sensor, a speed detection sensor, and a torque sensor (not shown) and generates a chopping signal whose pulse width is modulated in frequency, pulse width and duty-cycle on the basis of the received signals and applied it to the gate of the first switching element Q1. The microprocessor 16 also applies the A-phase position signal to gate of the second switching element Q2.

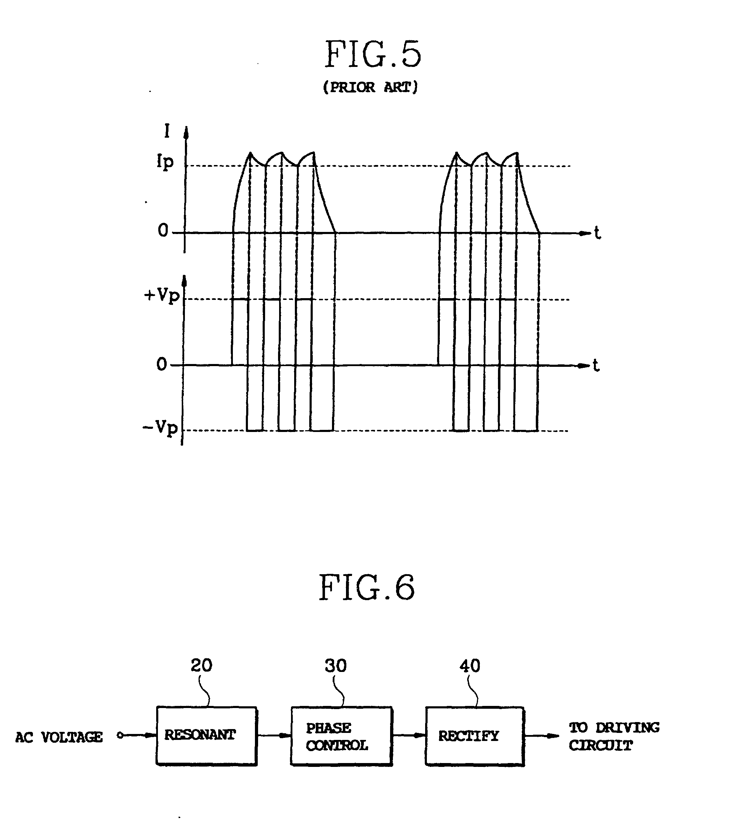

If the chopping signal from the pulse width modulation stage 14 and the A-phase position signal are applied respectively to the first and second switching elements Q1, Q2, these elements Q1, Q2 are switched in response thereto, thereby supplying power to the A-phase coil 6. At this time, the voltage across and the current flowing in the A-phase coil 6 are as shown in Figure 5.

The first switching element Q1 is switched in response to the chopping signal during the turning-on of the switching element Q2 by the A-phase position signal, which allows the chopping of the electric current flowing in the A-phase coil 6, resulting in restriction of the increase in current and thus regulation of the current in the A-phase coil 6.

The + A and -A poles of the stator 2 on which the A-phase coil is wound generate a magnetic force proportional to the regulated current IA by the chopping of the current waveform as described above, and rotate the rotor 4 by attracting the magnetic poles of the rotor 4 adjacent the + A- and -A poles of the stator 2, followed by the switching operations of the third to sixth switching elements Q3 to Q6 according to the respective positional signals of the B and C phases associated with the rotor 4. Then, the switching operations apply the chopped currents to the B and C phases 8, 10, which causes generation of the magnetic force proportional to the current of the chopped waveforms in the order phase A, phase B and phase C, resulting in the continuous spinning of the rotor 4.

Due to the fact that the speed of the rotor 4 depends upon the intensity of the generated magnetic force, the switched reluctance motor speed control may be made by increasing or decreasing the electric current flowing in the phase coils 6, 8, 10 through the adjustment of the frequency, the pulse width and the duty cycle of the chopped signal in compliance with desired switched reluctance motor speed.

However, if the switched reluctance motor is rotated at high speed (e.g. 3000 rpm), the periods of the rotor positional signals, which are generated from the position sensors for each phase, become extremely short. This causes the pulse width modulation stage 14 to generate a chopping signal whose frequency exceeds the switching speeds of the first, third and fifth switching elements Q1, Q3, Q5, so that switching cannot promptly be performed in response to the chopping signal. Thus, a problem arises in that inaccurate control of the current in each phase coil of the stator 2 results in worse control of the motor speed.

It is an aim of the present invention to overcome the afore-mentioned problem.

A driving circuit according to the present invention is characterised by power supply means for applying a variable dc voltage to the switching section so as to vary the magnitude of the currents passed through the motor's stator coils and thereby control the speed of a motor being driven by the circuit.

Preferably, the power supply means composes an ac input, a rectifier and switching means for adjusting the proportion of an ac signal, applied to the ac input, that is applied to the rectifier.

Preferably, the switching means comprises an inductor, a variable resistance and a capacitor connected in series across the ac input, a triac in series with the rectifier and the ac input, and a diac connected between a terminal of the capacitor and the gate of the triac such that the diac conducts when the capacitor is charged to a predetermined level.

Preferably, a circuit according to the present invention includes a rotor position sensor for sensing the rotor position of the switched reluctance motor. More preferably, the switching circuit comprises a plurality of switching elements and each switching element is controlled by a respective control signal solely dependent on sensed rotor position. Still more preferably, the switching elements are arranged in pairs, each pair being arranged for having a stator coil of the switched reluctance motor connected in series therebetween.

An embodiment of the present invention will now be described, by way of example, with reference to Figures 6 to 10 of the accompanying drawings, in which:

Figure 1 illustrates the construction of a conventional switched reluctance motor;

Figure 2 is a circuit diagram of a driving circuit for the conventional switched reluctance motor of Figure 1;

Figure 3 is a block diagram of a conventional switched reluctance motor speed control apparatus;

Figure 4 is a block diagram of another conventional switched reluctance motor speed control apparatus;

Figure 5 illustrates the controlled voltage and current waveforms for a stator coil;

Figure 6 is a block diagram of a switched reluctance motor speed control apparatus in accordance with the present invention;

Figure 7 is a circuit diagram of a driving circuit according to the present invention;

Figure 8 illustrates the voltage waveform of a mains supply;

Figure 9 illustrates the waveform of the phase-controlled ac voltage produced by the ac chopping stage of Figure 7; and

Figure 10 illustrates the current and voltage waveforms for a stator coil, controlled by speed control apparatus according to the present invention.

Referring to Figure 6, a speed control apparatus for a switched reluctance motor includes a thresholding stage 20, an ac chopping stage 30, and a rectifying stage 40.

The thresholding stage 20 receives a commercial mains ac voltage. The ac chopping stage 30 controls proportion of the mains ac voltage cycle applied to the rectifying stage 40 in dependence on the thresholding stage 20.

The rectifying stage 40 fully rectifies the chopped ac voltage to obtain a dc voltage, and then provides it to a driving circuit for the switched reluctance motor.

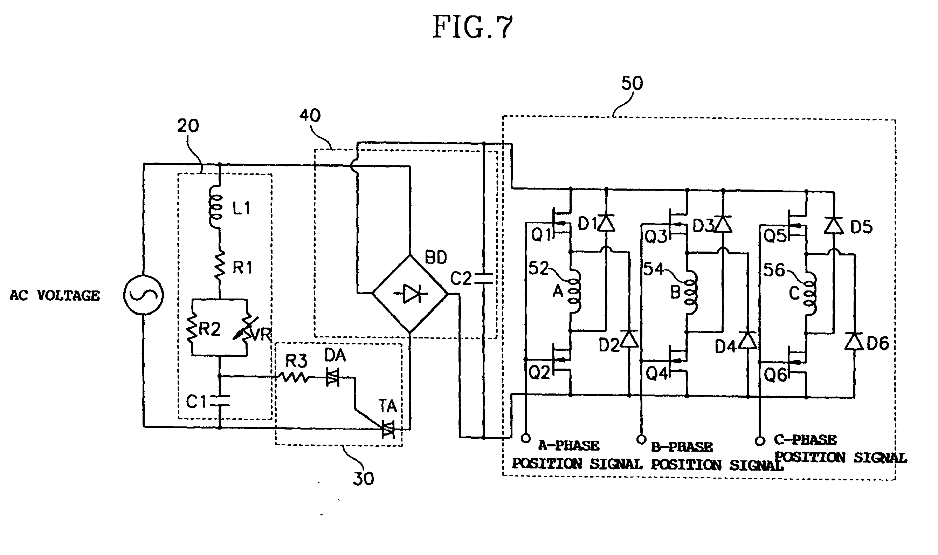

Referring to Figure 7. the thresholding stage 20 includes a inductor L1, a resistor R1, a resistor R2 and a variable resistor VR in parallel, and a capacitor C. The inductor L1, the resistors R1, R2 and VR, and the capacitor are connected to form a LRC series-resonant circuit.

The ac chopping stage 30 consists of a resistor R3, a diac DA and a triac TA. The diac DA generates trigger pulses for switching the triac TA to control the proportion of the ac mains cycle applied to the rectifying stage 40.

The rectifying stage 40 consists of a diode bridge BD and a smoothing capacitor C2. The diode bridge BD is used to full-wave rectify the chopped ac mains, and the smoothing capacitor C2 is used to remove ripple components contained in the resulting dc voltage for application to the driving circuit 50.

The driving circuit 50 includes six switching elements Q1, ..., Q6 for applying the dc voltage to each of phase coils 52, 54, 56, with reference to the rotor position signal of each phase input from the position sensor, and six diodes D1, ..., D6 for protecting the switching elements Q1, ..., Q6 from the back EMF created when the respective switching elements Q1, ..., Q6 are turned off.

The operation of the circuit shown in Figure 7 will now be described with reference to Figures 6 to 10.

When a user adjusts the variable resistor VR of the thresholding stage 20 to obtain a desired motor speed, the impedance of the resonance frequency generating stage 20 is varied accordingly. More specifically, the capacitor C1 is charged towards the ac voltage via the three resistors R1, R2, VR and the reactance L1, and is then discharged in every cycle of the ac mains. The charging rate of the capacitor C1is varied by varying the value of the variable resistor VR. The diac DR conducts when the voltage across the capacitor C1 is outside a voltage range extending either side of 0V.

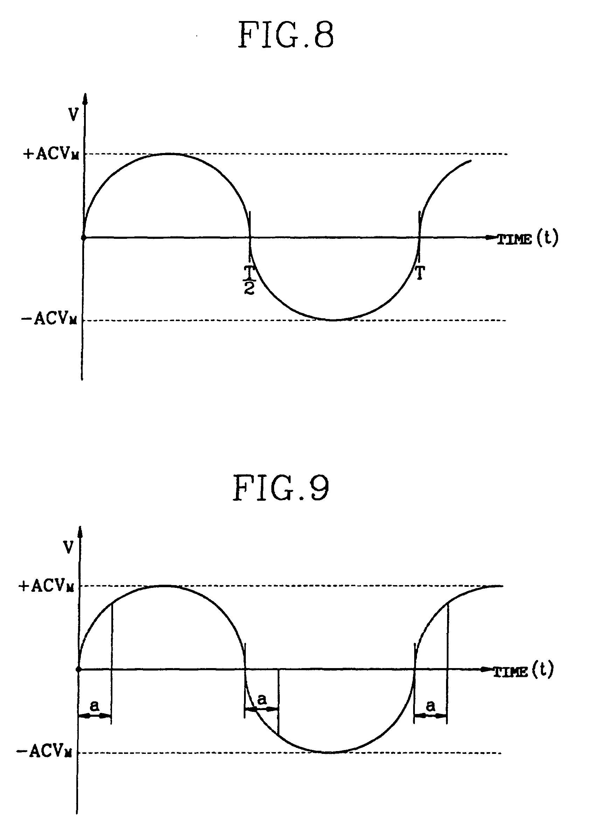

When the diac DR conducts, it applies a signal to the gate of the triac TR causing the triac TR to conduct. Consequently, the mains ac (Figure 8) is chopped as shown in Figure 9. It can be seen that the triac TR remains non-conductive for the period 'a' at the start of each half-cycle, i.e. while the capacitor C1 is charging to the voltage at which the diac DR conducts. The chopped ac voltage appears across the diode bridge BD and is rectified thereby.

As a result of the chopping, the average value of ac voltage applied to the diode bridge BD is reduced. The average ac voltage is given by:-

$$V_{ave} = \frac{2}{T} \int_{t=a}^{T/2} V_0 \sin(\omega t)\, dt$$

where, $V_{ave}$ is the average ac voltage level, $V_0$ is the

peak ac voltage, and *a* is chopping control angle.

The rectified voltage from the diode bridge 40 is smoothed by the smoothing capacitor C2. Ignoring the voltage drop across the diodes of the diode bridge BD, the smoothed dc voltage is $V_{ave.}$

The dc voltage is applied to the driving circuit 50 and the switching elements Q1 - Q6 are switched in response to the rotor position signals for each phase which are applied to the appropriate gates of the switching elements Q1 - Q6, thereby applying the dc voltage to each of phase coils 52, 54, 56 in the order A, B, C.

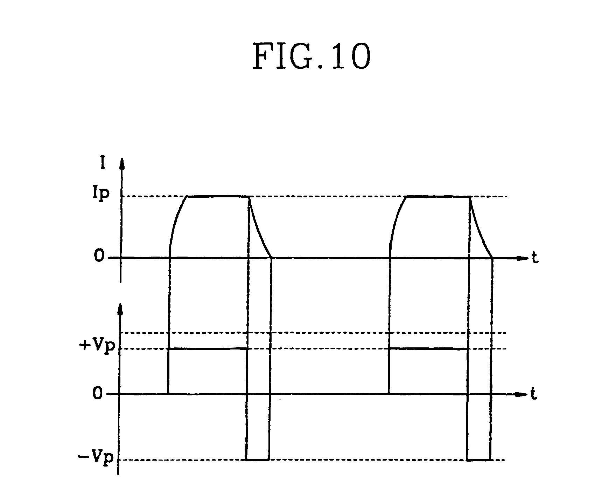

The waveforms of the voltages and currents applied to each coil of each phase are shown in Figure 10. Coils 52, 54, 56 create magnetic force of an intensity propotional to the current flowing therethrough. This magnetic force attracts the adjacent magnetic pole of the rotor (see Figure 1) to cause the rotor to rotate. The speed of the rotor is dependent on the intensity of the magnetic force generated at coils 52, 54, 56.

**Claims**

1. A driving circuit for a switched reluctance motor, comprising a switching circuit (50) arranged to selectively pass currents through the stator coils of a switched reluctance motor in dependence on the position of the rotor of the motor being driven, **characterised by** power supply means (20, 30, 40) for applying a variable dc voltage to the switching section so as to vary the magnitude of said currents and thereby control the speed of a motor being driven by the circuit.

2. A circuit according to claim 1, wherein the power supply means comprises an ac input, a rectifier (40) and switching means (20, 30) for adjusting the proportion of an ac signal, applied to the ac input, that is applied to the rectifier.

3. A circuit according to claim 2, wherein the switching means comprises an inductor (L1), a variable resistance (R1, R2, VR) and a capacitor (C1) connected in series across the ac input, a triac in series with the rectifier and the ac input, and a diac connected between a terminal of the capacitor and the gate of the triac such that the diac conducts when the capacitor is charged to a predetermined level.

4. A circuit according to any preceding claim, including a rotor position sensor for sensing the rotor position of the switched reluctance motor, wherein the switching circuit comprises a plurality of switching elements (Q1, ..., Q6) and each switching element is controlled by a respective control signal solely dependent on sensed rotor position.

5. A circuit according to claim 4, wherein the switching elements are arranged in pairs, each pair being arranged for having a stator coil of the switched reluctance motor connected in series therebetween.

**Patentansprüche**

1. Steuerkreis für einen geschalteten Reluktanzmotor, mit einem Schaltkreis (50), der vorgesehen ist, um wahlweise Ströme durch die Statorspulen eines geschalteten Reluktanzmotors in Abhängigkeit von der Position des Rotors des angetriebenen Motors zu leiten, **gekennzeichnet durch** eine Stromversorgungseinrichtung (20, 30, 40) zum Anlegen einer variablen Gleichstromspannung an den Schaltabschnitt, um so die Stärke der Ströme zu variieren und um so die Drehzahl des Motors zu kontrollieren, der von dem Kreis angetrieben ist.

2. Steuerkreis nach Anspruch 1, wobei die Stromversorgungseinrichtung einen Wechselstromeingang, einen Gleichrichter (40) und Schaltmittel (20, 30) aufweist, um die Proportion eines Wechselstromsignals zu justieren, welches an den Wechselstromeingang angelegt ist, der dem Gleichrichter zugeführt wird.

3. Steuerkreis nach Anspruch 2, wobei die Schaltmittel eine Spule (L1), variable Widerstände (R1, R2, VR) und eine Kapazität (C1) aufweisen, die in Reihe über den Wechselstromeingang geschaltet sind, und eine Zweiweg-Thyristortriode aufweisen, die in Reihe mit dem Gleichrichter und dem Wechselstromeingang geschaltet ist, und eine Zweiweg-Thyristordiode aufweisen, die zwischen einem Anschluß der Kapazität und dem Gate der Zweiweg-Thyristortriode angeschlossen ist, so dass die Zweiweg-Thyristordiode durchleitet, wenn die Kapazität auf einen bestimmtes Niveau aufgeladen ist.

4. Steuerkreis nach einem der vorherigen Ansprüche, umfassend einen Rotorpositionssensor zum Erfassen der Rotorposition des geschalteten Reluktanzmotors, wobei der Schaltkreis eine Mehrzahl von Schaltelementen (Q1, ..., Q6) umfasst und jedes Schaltelement durch ein zugehöriges Kontrollsignal kontrolliert wird, welches einzig von der erfassten Rotorposition abhängig ist.

5. Steuerkreis nach Anspruch 4, wobei die Schaltelemente in Paaren arrangiert sind und wobei jedes Paar derart angeordnet ist, dass eine Statorspule des geschalteten Reluktanzmotors in Reihe dazwischen geschaltet ist.

**Revendications**

1. Circuit de pilotage pour moteur à réluctance commutée, comprenant un circuit de commutation (50) conçu pour faire passer sélectivement des courants à travers les enroulements de stator d'un moteur à réluctance commutée en fonction de la position du rotor du moteur attaqué, **caractérisé par** un moyen d'alimentation électrique (20, 30, 40) pour appliquer une tension continue variable à la section de commutation afin de faire varier l'amplitude desdits courants et de commander ainsi la vitesse d'un moteur attaqué par le circuit.

2. Circuit selon la revendication 1, dans lequel le moyen d'alimentation électrique comprend une entrée à courant alternatif, un redresseur (40) et un moyen de commutation (20, 30) pour ajuster la proportion d'un signal alternatif, appliqué à l'entrée alternative, qui est appliqué au redresseur.

3. Circuit selon la revendication 2, dans lequel le moyen de commutation comprend une inductance (L1), une résistance variable (R1, R2, VR) et un condensateur (C1) connectés en série aux bornes de l'entrée alternative, un triac en série avec le redresseur et l'entrée alternative, et un diac connecté entre une borne du condensateur et la grille du triac de façon que le diac soit conducteur lorsque le condensateur est chargé à un niveau prédéterminé.

4. Circuit selon l'une quelconque des revendications précédentes, comportant un capteur de position du rotor pour détecter la position du rotor du moteur à réluctance commutée, dans lequel le circuit de commutation comprend une pluralité d'éléments de commutation (Q1, ..., Q6) et chaque élément de commutation est commandé par un signal de commande respectif qui ne dépend que de la position détectée du rotor.

5. Circuit selon la revendication 4, dans lequel les éléments de commutation sont agencés par paires, chaque paire étant agencée de façon à avoir un enroulement de stator du moteur à réluctance commutée connecté en série entre ceux-ci.

# FIG.1

(PRIOR ART)

# FIG.2

(PRIOR ART)

# FIG.3

(PRIOR ART)

12

FREQUENCY
CONTROL SIGNAL

A-PHASE POSITION
SIGNAL

SIGNAL
CONTROL-
LING
STAGE

PWM CONTROL
SIGNAL

DUTY CYCLE
CONTROL SIGNAL

14

PWM
STAGE

TO GATE OF SWITCHING
ELEMENT Q1

TO GATE OF SWITCHING
ELEMENT Q2

# FIG.4

(PRIOR ART)

16

A-PHASE POSITION
SIGNAL

SPEED SIGNAL

TORQUE SIGNAL

MICROPRO-
CESSOR

TO GATE OF SWITCHING
ELEMENT Q1

TO GATE OF SWITCHING
ELEMENT Q2

# FIG.5

(PRIOR ART)

# FIG.6

AC VOLTAGE → **RESONANT** (20) → **PHASE CONTROL** (30) → **RECTIFY** (40) → TO DRIVING CIRCUIT

# FIG.7

AC VOLTAGE

20
40
50

L1
R1
R2 VR
C1
R3 DA TA
30

BD
C2

Q1 D1
52 A
D2
Q2

Q3 D3
54 B
D4
Q4

Q5 D5
56 C
D6
Q6

A-PHASE
POSITION SIGNAL

B-PHASE
POSITION SIGNAL

C-PHASE
POSITION SIGNAL

EP 0 840 438 B1

9

# FIG.8

# FIG.9

# FIG.10